# EUROPEAN PATENT APPLICATION

(11) **EP 1 981 035 A1**
(43) Date of publication of application: **15.10.2008**
(21) Application number: 06823556.3
(22) Date of filing: 01.12.2006
(51) Int. Cl.: H01B 1/24, C01B 31/02, C08K 3/04, C08K 7/06, C08L 101/12, D01F 9/127, H01B 1/00, H01Q 1/32

(54) **CONDUCTIVE MEMBER CONTAINING FIBER NANOCARBON AND CONTACT DEVICE USING SUCH CONDUCTIVE MEMBER**

(30) Priority: 01.12.2005 JP 2005347808
(71) Applicant: Kojima Press Industry Co., Ltd., Toyota-shi, Aichi-ken 471-8588 (JP); Asahi Rubber Inc., Omiya-ku Saitama-shi, Saitama (JP); Mitsui & Co., Ltd., Chiyoda-Ku Tokyo 100-8831 (JP)
(72) Inventor: YAMAMOTO, Takahisa, KOJIMA PRESS INDUSTRY CO., LTD., Toyota-shi, Aichi 4718588 (JP); OKADA, Shigeki, KOJIMA PRESS INDUSTRY CO., LTD., Toyota-shi, Aichi 4718588 (JP); HANDA, Koichi, Bussan Nanotech Research Institute Inc., Tokyo 1000004 (JP); Subiantoro, Bussan Nanotech Research Institute Inc., Tokyo 1000004 (JP); TAKAMI, Hiroshi, ASAHI RUBBER INC., Nishishirakawa-gun, Fukushima 9690101 (JP); WATANABE, Yoichiro, ASAHI RUBBER INC., Nishishirakawa-gun, Fukushima 9690101 (JP)
(74) Representative: Flaccus, Rolf-Dieter
(86) International application number: PCT/JP2006/324077
(87) International publication number: WO 2007/063984

(57) **Abstract**

A conductive member composed of a conductive resin transmits a signal by being conductively connected with a body to be connected. The conductive resin includes fiber nanocarbon in the resin.

## Description

### [Technical field]

This invention relates to a conductive member which is composed of a conductive resin comprising fibrous nanocarbon in a resin, and a contact device using thereof.

### [Background art]

Contact devices are used in a wide range of fields in which electric contact is required, and the examples include contact devices used for vehicle-mounted glass antennas. At the contact between such a glass antenna and a vehicle body, a connector has been conventionally used. However, connection by a connector is not only complex, but it also requires a large number of components, resulting in an increase of manufacturing cost.

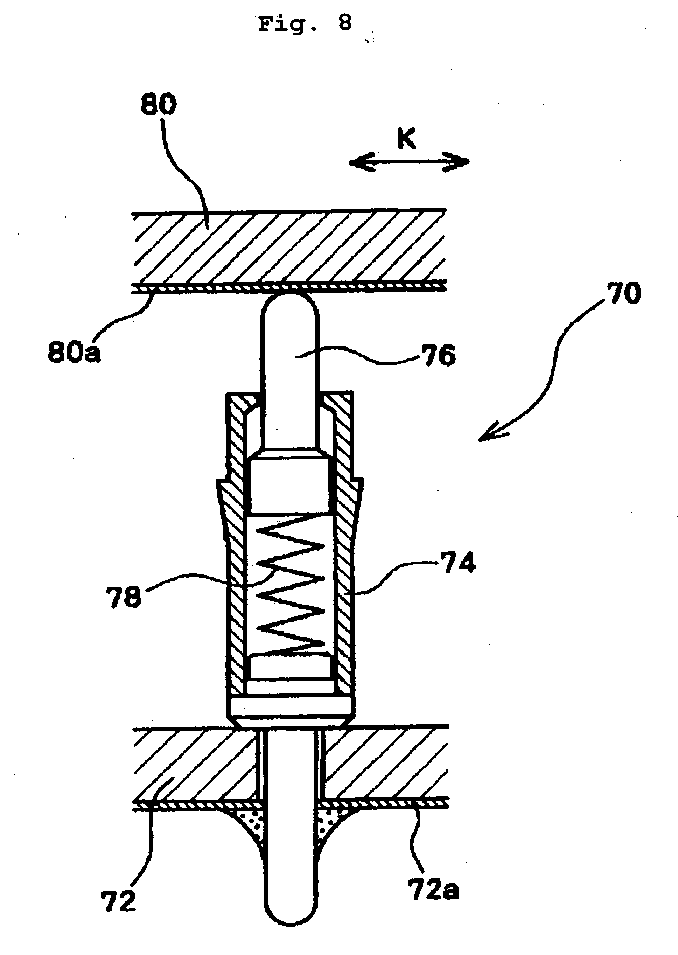

Figure 8 shows an example of a conventional contact device generally used. A contact device 70 is equipped with a fixed part 74 which is fixed to one component 72, a movable contact 76 which consists of a conductor and is contained in the fixed part 74 in a movable manner, and a spring 78 which similarly consists of a conductor and is contained in the fixed part 74 in a movable manner. The movable contact 76 is biased by the spring 78, so that it abuts against the contact point of the other component 80. The spring 78, movable contact 76 and fixed part 74 function as an electrically conducting path, thereby ensuring the conduction between the two components 72 and 80 (between the conductor patterns 72a and 80a each of which is provided to the respective part).

In the above contact device, we can easily consider a case wherein a conductive rubber is used as the movable contact, which may also act to absorb vibration. However, there is a problem of deterioration due to abutting of the conductive rubber used (crack of the conductive rubber, loss of the granular conductive filler). To solve this problem, a contact device was proposed (JP, A, 2005-166307), wherein the shape of the surface abutting against an object to be abutted was changed to enlarge its area, thereby suppressing cracks of the conductive rubber and improving the problem of deterioration of the conductive rubber. However, in this contact device, similar to the contact device 70, the conductive rubber in which silver-coated glass beads are kneaded is used as the movable contact, and the conductive filler has a granular morphology, so that the loss of the conductive filler is not sufficiently prevented. In addition, there remains a problem of color change and deterioration due to corrosion of the silver. Moreover, since the silver-coated glass beads are expensive as a conductive material, inexpensive materials are desired.

Other known conductive materials which can be blended into resins and rubbers include metal fibers and their powders, linear carbon fibers, carbon black (ketjen black, acetylene black, etc.), silicon carbide fibers, and fibers of potassium titanate and whisker, etc. and their powders. However, these materials do not have a sufficient conductivity; in particular, they lack conductivity when used in a contact device of the above vehicle-mounted glass antennas, so that they are unable to exhibit sufficient transmission properties. In concrete terms, while electric resistance of a conductive member is required to be 10⁻² Ω·cm or less, when a carbon such as ketjen black and acetylene black is used, the electric resistance of the conductive member reaches 10² Ω·cm, and due to the significant lack of conductivity, this conductive member cannot exhibit sufficient transmission properties.

Meanwhile, in recent years nanocarbons such as carbon nanotubes have been attracting attention in a wide range of industrial fields due to their physical properties (strength, thermal conductivity, electric conductivity, etc.) and chemical properties (chemical resistance, etc.). For example, multiwalled carbon nanotubes have electric conductivities higher than those of conventional carbon materials such as carbon black, etc., and they are also superior in mass production compared to single-walled carbon nanotubes; therefore, they are used as conductive materials in antistatic agents and others.

For example, in the JP Patent 2862578, a resin compound made by the following process is disclosed: a metal-containing particle and a compound containing gaseous carbon such as carbon monoxide and benzene, etc. are mutually contacted at 850-1200°C and 0.1-10 atm for 10 s to 180 min to obtain an ultra-thin carbon fibril, and the dimension of this carbon fibril is uniformized using a vibration ball mill, etc.; then a synthetic resin is added and kneaded into the carbon fibril to obtain said resin compound.

In the JP, B2, 7-77088, a conductive silicone rubber composition consisting of a fine carbon fiber and a synthetic resin is disclosed, which aims at the prevention of static charges in a mechanical part such as a paper feed roller of copiers. The JP Patent 3480535 discloses an antistatic rubber composition consisting of a rubber composition containing a rubber such as natural rubbers, a silica filler, and a graphitized vapor-grown carbon fiber, which can provide an antistatic function without losing oil resistance and acid resistance.

In the JP Patent 2863192, a thermoplastic elastomer composition containing at least one thermoplastic elastomer and an ultra-thin carbon fiber is disclosed, with examples of electric parts and others in which noise due to electrostatic generation is suppressed, aiming at the improvement of antistatic property. The JP Patent 3271983 discloses a carbon-fibril-containing rubber composition consisting of a mixture of a carbon fibril material with a synthetic rubber and/or a natural rubber, aiming at the improvement of hardness and strength.

Furthermore, JP Patent 3153264 discloses a silicone rubber composition wherein a silica, an ultra-thin carbon fiber, an organic foaming agent and an organic peroxide are added to a polyorganosiloxane, with the aim of using the carbon fiber for foaming. JP Patent 258 6505discloses a conductive material containing a polymer and a bent carbon fiber chop wherein its intrinsic resistance is decreased to approximately 10 Ω·cm.

As described, resin compositions containing carbon nanotubes and their applications which have been disclosed to date aim only to improve their performances such as conductivity, charging and electrostatic characteristics; there is no report in which the improvement of transmission properties is aimed as in the case of contact devices for antennas.

### [Disclosure of the invention]

### [Problem to be solved by the invention]

An object of the present invention is to provide a contact device having desired conductivity with superior corrosion resistance, without conventional problems such as loss of conductive fillers, and which can be easily manufactured.

### [Means of solving the problem]

To achieve the above object, the inventors of the present invention dedicated themselves to their research and newly found that fibrous nanocarbons are extremely effective in contact devices, and as a result of further research, they completed this invention.

Namely, the invention relates to a conductive member comprising a conductive resin, for transmitting electric signals by being conductively connected to an obj ect to be connected, wherein said conductive resin comprises a fibrous nanocarbon in a resin that is a base material.

In addition, the invention relates to said conductive member, wherein the aspect ratio of the fibrous nanocarbon (the ratio of the total length in the longitudinal direction to the maximum diameter of the nanocarbon) is between 10 and 20000.

Furthermore, the invention relates to said conductive member, wherein the fibrous nanocarbon is contained at 4-40 wt% of the total weight of the conductive resin.

In addition, the invention relates to said conductive member, wherein the fibrous nanocarbon is a carbon nanotube, a carbon nanofiber or a mixture thereof.

Furthermore, the invention relates to said conductive member, wherein the fibrous nanocarbon is a multiwalled carbon nanotube.

In addition, the invention relates to said conductive member, wherein the maximum diameter of the cross sections orthogonal to the longitudinal direction of the multiwalled carbon nanotube is 15-150 nm.

Furthermore, the invention relates to said conductive member, wherein I_{D}/I_{G} of the multiwalled carbon nanotube measured by Raman spectroscopic analysis is 0.1 or less.

In addition, the invention relates to said conductive member, wherein the conductive member is composed of a conductive resin comprising a three-dimensional network-form carbon fibrous structure in a resin that is a base material, said carbon fibrous structure being composed of multiwalled carbon nanotubes that extend from granular parts as origins of growth during a growth process and that are connected to each other, and wherein cross sections orthogonal to the longitudinal direction of said multiwalled carbon nanotubes have polygonal shapes.

Furthermore, the invention relates to said conductive member, wherein the carbon nanofiber is a carbon nanofiber manufactured by gas phase process.

In addition, the invention relates to said conductive member, wherein the resin that is a base material is an elastomer. Here, the elastomer refers to a collective term of high-molecular materials which exhibit rubber elasticity at around normal temperature, including synthetic rubbers, natural rubbers and composites thereof.

Furthermore, the invention relates to a contact device comprising said conductive member.

In addition, the invention relates to a contact device comprising said conductive member, a base, and an elastic member mounted on said base, wherein said conductive member is biased by said elastic member so that it is conductively connected to an obj ect to be connected.

The conductive member of the invention has desired transmission properties, and is able to solve problems occurring in the use of conductive fillers such as silver-coated glass beads. Namely, since a fibrous nanocarbon of non-spherical shape is used as a conductive filler, the problem in conventional technologies that the prevention of the loss of conductive fillers due to their spherical shape is not sufficient can be solved; in addition, the fibrous nanocarbon itself has conductivity, so that coating by a metal such as silver is not necessary, and therefore the problem of corrosion of the coated metal which leads to color change and deterioration of movable contacts can be solved as well.

Here, the fibrous nanocarbon used in the invention preferably has a ratio of the total length in the longitudinal direction to the maximum diameter (aspect ratio) within a certain range (for example, 10-20000), in order to surely prevent the loss of conductive fillers. Examples of the fibrous nanocarbon include carbon nanotubes and carbon nanofibers, both of which have hollow, solid or both hollow/solid cross sections. In the case of carbon nanotubes, both single-walled and multiwalled types can be used; multiwalled types are particularly preferable.

The conductive member of the invention can provide desired transmission properties and solve problems occurring in the use of conductive fillers such as silver-coated glass beads. Namely, since a fibrous nanocarbon of non-spherical shape is used as a conductive filler, the problem in conventional technologies that the prevention of the loss of conductive fillers due to their spherical shape is not sufficient can be solved; in addition, the fibrous nanocarbon itself has conductivity, so that coating by a metal such as silver is not necessary, and therefore the problem of corrosion of the coated metal which leads to color change and deterioration of movable contacts can be solved as well. Furthermore, fibrous nanocarbons such as carbon nanotubes and carbon nanofibers are more inexpensive as a conductive member than silver-coated glass beads, which is advantageous.

In particular, in the case of the above-described multiwalled carbon nanotubes, since they are contained in a resin while taking a three-dimensional network-form carbon fibrous structure, their dispersion characteristic is excellent, so that its amount of addition can be decreased compared to those with a structure of high-density aggregate wherein multiple carbon nanotubes are firmly entangled in the resin. Accordingly, it is economically advantageous, and can suppress adverse effects on properties of the resin that is a base material (such as transparency, etc.).

By appropriately determining the area-based circle-equivalent mean diameter of the above carbon fibrous structure, it becomes possible to exhibit sufficient conductivity without adverse effects on the processes of mixing with resin or formation thereafter. The circle-equivalent mean diameter is a factor determining the longest dimension of the carbon fibrous structure upon blending in a resin. The circle-equivalent mean diameter is preferably 50-100 µm.

In addition to the above effects, since the carbon fibrous structure is held within a resin under an extremely sparse condition, sufficient conductivity can be exhibited by the addition of only a small amount of the carbon fibrous structure; this is extremely advantageous.

Moreover, in Raman spectroscopic analysis, while a large single crystal graphite shows an only peak near 1580⁻¹ cm (G band), the carbon nanotube also shows a peak near 1360⁻¹ cm (D band) due to the finite minute size of crystals or lattice defects. When the ratio of the strength of the D band to G band (R = I₁₃₆₀/I₁₅₈₀ = I_{D}/I_{G}) is a certain value or less, preferably 0.1 or less, then it means that the amount of defects in each layer is significantly small.

Thus, due to the significantly small amount of defects in each layer of the carbon nanotube used as a conductive filler, its conductivity becomes more superior. In addition, due to this significantly small amount of defects, Young's modulus is improved compared to general carbon nanotubes, and bending rigidity (EI) is improved leading to a superior restoring characteristic; as a result, dispersion in a resin becomes superior. Because of these characteristics, sufficient conductivity can be exhibited by the addition of only a small amount of the carbon nanotube, leading to the realization of extremely advantageous conductive members.

Using the conductive member of the invention, in addition to the above-described effects, even when it is used as a contact device for vehicle-mounted antenna modules wherein a conductive member must be abutted against a glass window, the abnormal noise and damage due to scratching of the abutting surface can be prevented, and a vibration-absorption action and a function to stably maintain the abutting area can be exhibited. In particular, using the combination of the above-described carbon fibrous structure and/or the multiwalled carbon nanotube with I_{D/}I_{G} of 0.1 or less, when the conductive member is connected under the state of elastic deformation of an elastomer that is a base material, said combination may exhibit a restoring force in the elastomer, leading to the prevention of stress alleviation at the abutted part of the conductive member for a long period of time, and to maintaining the reliability of transmission properties for a long period of time.

In addition, using the contact device of the invention, the above-described actions and effects can be provided, so that a contact device that is suitable for the contact devices in vehicle-mounted antenna modules can be realized.

### [Brief Description of Drawings]

[Fig. 1] An external view showing an example of the contact device of the invention.
[Fig. 2] The A-A cross-sectional diagram of the contact device shown in Fig. 1.
[Fig. 3] The B-B cross-sectional diagram of the contact device shown in Fig. 2.
[Fig. 4] A diagram showing an example of the state wherein the contact device of Fig. 1 is abutted against an object to be abutted.
[Fig. 5] A diagram showing another example of the state wherein the contact device of Fig. 1 is abutted against an object to be abutted.
[Fig. 6] A diagram showing the third example of the state wherein the contact device of Fig. 1 is abutted against an object to be abutted.
[Fig. 7] A diagram showing an example of the main structure of a vehicle-mounted glass antenna using the contact device of the invention.
[Fig. 8] A schematic diagram showing a conventional contact device.
[Fig. 9] A schematic diagram showing a network analyzer used in the examples.

### [Description of Symbols]

10: Contact device
12: Base
12a: Bolt hole
12b: Locking part
14: Elastic member
16: Contact part
16a: Guard part
18: Intermediate body
20: Conductor wire
22: (First) component
24: (Second) component (object to be abutted)

26: Metallic lead part
26a: Arm
28: Abutting part
30: Conductive pattern
32: Insulator
32a: Arm
32b: Pin
34: Guide hole
36, 38: Engagement catch

40: Through hole
42: Gap
50: Vehicle-mounted glass antenna
50a, 50b: Antenna unit
52: Antenna element
52a: End contact point
54: Rear window glass
56: Roof panel
58: Substrate-supporting base

### [Best Mode for Carrying out the Invention]

In the following, the present invention is described in detail on the basis of preferred embodiments. The conductive member of the invention is characterized in that it is composed of a conductive resin which comprises a fibrous nanocarbon, in particular, a later-described specific carbon nanotube or carbon nanofiber, in a resin that is a base material.

### [1] Conductive member

The conductive member of the invention is composed of a conductive resin which comprises a fibrous nanocarbon in a resin that is a base material; through the conductive connection between one end of the conductive member and an object to be connected, an electric signal is transmitted from said object to be connected to the other end of the conductive member.

A method for manufacturing the fibrous nanocarbon used in the invention is not particularly limited. For example, carbon nanotubes or carbon nanofibers can be manufactured using known methods such as arc discharge method, laser ablation method and vapor growth method. Below, specific morphologies of multilaylered carbon nanotubes and carbon nanofibers are described in detail; however, the invention is not limited thereto.

### (A) Multiwalled carbon nanotube

The multiwalled carbon nanotube used in the invention is obtained by heat treatment of patchy accumulation of carbon fibers at 2400-3000°C; in a fibrous material having a structure wherein sheets constituting a tube are laminated in the longitudinal direction of the tube, said sheets having polygonal cross sections orthogonal to the axis, (that is, a discontinuous plane, wherein a part of the cross section orthogonal to the longitudinal direction of the tube is either a straight line or a curved line with no continuous curvature, is at least partially present in the axial direction), saidmultiwalled carbon nanotube is characterized in that the maximum diameter of said cross sections is 15-150 nm, and the aspect ratio is preferably 10-20000, and more preferably 100-20000, and I_{D}/I_{G} measured by Raman spectroscopic analysis is preferably 0.1 or less.

Among these characteristics, manyof the characteristics which contribute to the conductivity and dispersibility are derived from the fact that the multiwalled carbon nanotube used in the invention is prepared from an intermediate heat-generated at 800-1300°C by means of its annealing at a high temperature of 2400-3000°C. Regarding the multiwalled carbon nanotube of the invention, due to the annealing treatment, its real density increased from 1.89 g/cm³ to 2.1 g/cm³ and the I_{D/}I_{G} ratio measured by Raman spectroscopic analysis became 0.1 or less (at the largest 0.2 or less). This means that the nanotube is very dense with a small amount of defects both in the direction of sheet lamination and the direction of sheet surface, which leads to an improvement in bending rigidity (EI) accompanying with an increase of Young' s modulus, thereby increasing its restoring characteristic, with increased dispersibility and increased conductivity in the resin. With respect to the above I_{D}/I_{G} ratio, conventional multiwalled carbon nanotubes with this ratio of 0.1 or less have not yet been reported because conventional ones show a fairly large amount of the peak at 1360⁻¹ cm (D band) due to lattice defects and others, in addition to the peak at 1580⁻¹ cm (G band) due to the monocrystalline graphite structure.

Here, the range of the maximum diameter of the cross sections orthogonal to the axis is restricted to 15-150 nm because when the maximum diameter is too small, then the cross sections orthogonal to the axis do not have polygonal shapes, and when the maximum diameter is too large, then the dispersibility deteriorates accordingly. Meanwhile, an outer diameter of the carbon fiber is desirably within the range of 20-70 nm. Nanotubes having this range of outer diameter and wherein their cylindrical sheets are laminated in the orthogonal direction of the axis, namely, multiwalled ones, are hard to bend, and provided with elasticity, i.e., a characteristic of returning to their original shape after deformation; accordingly, even after carbon fibers are compressed, they tend to take a sparse structure after being distributed in a matrix such as resins, etc.

The aspect ratio is preferably in the range of 10-20000, and more preferably in the range of 100-20000. When the aspect ratio is too small, the problem of loss of conductive fillers tends to occur, and when it is too large, then the viscosity during mixture with resin becomes too high and formability deteriorates.

Examining the reasons why the multiwalled carbon nanotube of the invention has the above-described structure and characteristics, the following reasons are considered: in a generation furnace, an intermediate generated by heating the mixed gas of a catalyst and hydrocarbon at a constant temperature in the range of 800-1300°C has a (sodden-state, incomplete) structure that looks like pasted patchy sheets comprising carbon atoms.

When the above intermediates are heat-treated at a temperature in the range of 2400-3000°C, the patchy sheets comprising carbon atoms are re-aligned and mutually bonded to form multiple sheet-shaped layers. At this time, since each layer is restricted by the cylindrical steric structure possessed by the intermediates, it is unable to align by itself into a graphite structure. When the heat treatment is performed at a temperature sufficiently higher than 3000°C, then carbon atoms can be freed and re-aligned in a state of high degrees of freedom. However, when it is performed at a temperature 3000°C or lower, each of the carbon atoms is able to move only in a state of maintaining its bond (being connected, i.e., in a patchy state), and accordingly, while defects within an independent sheet can be restored, faults as well as aggregation and disaggregation of layers at cross sections due to partial excess or deficiency of carbon atoms are generated. Generally, in multiwalled carbon nanotubes generated by CVD method, a structure wherein sheets are beautifully laminated may be observed by a transmission electron microscope in some cases; however, by means of Raman spectroscopic analysis, significantly large D bands with many defects are observed. In addition, when nanotubes are generated by CVD method, only a patchy structure was obtained without the development of sheets depending on the condition.

The inventors of the present invention devoted themselves to the investigation of maximally reducing the above I_{D}/I_{G} ratio; as a result, by most appropriately adjusting the conditions such as the above heat-generation temperature and annealing temperature, they developed multiwalled carbon nanotubes which realize each of the improvement of conductivity and improvement of dispersibility owing to an increase of bending rigidity; they also applied the developed nanotubes to a conductive member for antennas to exhibit excellent transmission properties; thus, the inventors accomplished the application development.

Furthermore, the multiwalled carbon nanotubes thus developed preferably constitute a three-dimensional network-form carbon fibrous structure, wherein said multiwalled carbon nanotubes are mutually bonded at granular parts which are formed during the above heat-generation process (growth process), and a plurality of said multiwalled carbon nanotubes extend from said granular parts. In this carbon fibrous structure, multiwalled carbon nanotubes are not only mutually entangled, but also they are mutually and firmly bonded at the granular parts; therefore, when they are blended in a resin, said structure is not dispersed as a simple body of carbon fiber, but it can be blended and dispersed in the matrix while maintaining its bulky structure. Moreover, in this carbon fibrous structure, because carbon fibers are mutually bonded at its granular parts formed during a growth process of said carbon fibers, the electric properties of the structure itself are very excellent; for example, its electric resistance value measured at a constant compression density is very low, compared to a simple entangled body of carbon microfibers, or a structure composed of contact points of carbon microfibers which are attached via a carbonaceous substance or its carbide after the synthesis of said carbon fibers; therefore, after being dispersed and blended into a matrix, this structure can form a superior conducting path.

Furthermore, the carbon fibrous structure used in the invention has an area-based circle-equivalent mean diameter of desirably around 50-100 µm. Here, the area-based circle-equivalent mean diameter is determined as follows: the external appearance of carbon fibrous structures is taken by an electron microscope or others, and in the picture taken, contours of each carbon fibrous structure is followed by an appropriate image analysis software such as WinRooF (product name, Mitani Corporation) to obtain an area inside the contour in order to calculate the circle-equivalent diameter of each fiber structure; then the calculated values are averaged to obtain the mean value. Since this value varies depending on the kind of matrix materials to be combined, such as resins, it is not that the circle-equivalent mean diameter is always used. However, the circle-equivalent mean diameter is a factor to determine the longest dimension of the carbon fibrous structure when blended in a resin; in general, when the circle-equivalent mean diameter is too small, the structure may not sufficiently exhibit its conductivity. In contrast, when the value is too large, it is possible that the mixing and dispersion becomes difficult or formability deteriorates, due to a significant increase of viscosity during kneading of the carbon fibrous structure into the resin.

In addition, since the carbon fibrous structure used in the invention has a three-dimensional network-form morphology wherein multiwalled carbon nanotubes are mutually bonded at granular parts and extend from said granular parts in a plural number as described above, its structure is bulky and exists sparsely. Accordingly, the bulk density is preferably 0. 0001-0. 05 g/cm³, and more preferably 0.001-0.02g/cm³. This is because when the bulk density is too large, it becomes difficult to improve properties of matrix such as resins by the addition of a small amount of the carbon fibrous structure.

The above carbon fibrous structure can be prepared by the above-described generation and annealing processes. When some innovations are made, for example, at least two kinds of carbon compounds with different decomposition temperatures are used as carbon sources, then most of the multiwalled carbon nanotubes can be made into those with this structure during their growth process (refer to Example 1 for detail).

### (B) Carbon nanofiber

The carbon nanofiber used in the invention preferably has an aspect ratio of 10-20000. When the aspect ratio is too small, the loss of conductive fillers tends to occur easily; when it is too large, then the viscosity becomes too high during the mixture with resins, resulting in problems such as deterioration of formability.

The carbon nanofiber used in the invention is a fine carbon fiber which is grown in a gaseous phase by thermal decomposition of organic compounds such as benzene and others. The fiber diameter (in a cross section orthogonal to the longitudinal direction) of a carbon nanofiber is preferably 0.01-1 µm. When the fiber diameter is too small, the strength of the fiber becomes weak; when it is too large, not only a large increase of viscosity occurs upon kneading with resins, but also productivity decreases and cost increases. The cross section of a carbon nanofiber is preferably concentric circle-shaped. At the center, it may have a hollow part or an amorphous part.

The carbon nanofiber used in the invention preferably has an R value of Raman spectrum of 0.5 or more, and a peak half band width at 1580⁻¹-cm spectrum of 20-40 cm⁻¹.

The carbon nanofiber used in the invention can be manufactured by a method described in, for example, JP A No. 7-150419, JP A No. 5-321039, JP A No. 60-215816, JP A No. 61-70014, JP A No. 5-36521, JP A No. 3-61768, and JP A No. 2004-3097. Carbon nanofibers are not limited to those prepared by gas phase process; carbon nanofibers manufactured by arc discharge method and laser method may also be used.

In an embodiment by vapor growth method, using a transition metal or its compounds as a seed, for example metallic ultramicropowders such as iron, nickel, cobalt, or ultramicroparticles based on ferrocene as a seed, and the ultramicropowder or ultramicroparticle of these seeds are formed on a substrate, to which a carbon material with optionally a carrier gas such as hydrogen are supplied in a gas phase to decompose the carbon under high temperature. Here, using ultramicropowders or ultramicroparticles as a seed, fine carbon fibers with the fiber diameters of 0.01-1 µm are grown on the substrate. As a method to form a seed, there are several methods including the following: a method wherein a seed-particle dispersion solution or a seed-source solution is applied on a substrate (the inner wall of a heating furnace may be used as a substrate) and dried to form the seed, a method wherein ferrocene, etc. is sprayed to form the seed, a method wherein microparticles of iron or its compounds are generated in a flowing state using ferrocene, etc; the seed may be formed on a substrate surface as described, or formed as a fluidized bed.

In the vapor growth method, a catalyst such as B, A1, Be, Si and boron (B) can be used; boron is particularly effective. For example, in order to dope boron, low-temperature-treated products with insufficient crystal development such as carbon fibers heat-treated at 1500°C or lower, or preferably non-heat-treated carbon fibers (as-grown carbon fibers), may be used and boronized at 2000°C or higher. As a boron, boron compounds such as B₂O₃, H₃BO₄, B₄C and BN, etc. can be used. The boron content in a carbon nanofiber is preferably 0.1-3 wt%.

The carbon nanofiber is contained in a conductive resin at the percentage of preferably 4-40 wt%, and more preferably 10-20 wt% relative to the total weight.

### (C) Conductive resin

The conductive resin used in the invention comprises a fibrous nanocarbon such as the above-described carbon nanotubes and carbon nanofibers in a resin.

### (1) Resin

The resin used in the invention may be both synthetic resins and natural resins. As the synthetic resins, both thermoplastic resins and hardening resins may be used. The thermoplastic resins include, for example, acrylonitrile-butadiene-styrene resin (ABS resin), acrylonitrile-ethylene/propylene-styrene resin (AES resin), methyl methacrylate-butadiene-styrene resin (MBS resin), acrylonitrile-butadiene-methyl methacrylate-styrene resin (ABMS resin), acrylonitrile-n-butyl acrylate-styrene resin (AAS resin), rubber-modified polystyrene (high-impact polystyrene), polyethylene resin, polypropylene resin, polystyrene resin, polymethyl methacrylate resin, polyvinyl chloride resin, cellulose acetate resin, polyamide resin, polyester resin, polyacrylonitrile resin, polycarbonate resin, polyphenylene oxide resin, polyketone resin, polysulfone resin, polyphenylene sulfide resin, fluorine resin, silicon resin, polyimide resin, polybenzimidazole resin and polyamide elastomer; the thermo-hardening resins include, for example, phenol resin, urea resin, melamine resin, xylene resin, diallyl phthalate resin, epoxy resin, aniline resin, furan resin, and polyurethane resin.

The resin used in the invention is preferably an elastomer, for example, natural rubber (NR) or isoprene rubber (IR), butadiene rubber (BR), epoxylated natural rubber (ENR), styrene butadiene rubber (SBR), nitrile rubber (NBR), chloroprene rubber (CR), ethylene propylene rubber (EPR, EPDM), butyl rubber (IIR), halobutyl rubber such as chlorobutyl rubber (CIIR), acrylic rubber (ACM), silicone rubber (Q), fluorine-containing rubber (FKM), butadiene rubber (BR), epoxylated butadiene rubber (EBR), epichlorohydrin rubber (CO, CEO), urethane rubber (U), polysulfide rubber (T), thermoplastic elastomers such as thermoplastic olefin-based elastomer (TPO), thermoplastic polyvinyl chloride-based elastomer (TPVC), thermoplastic polyester-based elastomer (TPEE), thermoplastic polyurethane-based elastomer (TPU), thermoplastic polyamide-based elastomer (TPEA), thermoplastic styrene-based elastomer (SBS), and the mixtures thereof. In particular, silicone rubbers in which fibrous nanocarbons are easily and homogenously dispersed, and which have a stable temperature characteristic in a wide range of temperatures (from low to high) are especially preferred.

The resin used in the invention may contain other components with amounts that do not impede the objects of the invention. For example, if necessary, additives such as fillers, softeners, vulcanizing agents, vulcanization accelerators, and processing aids may be contained. The fillers include carbon black, silica, clay, talc, etc.; the vulcanizing agents include sulfur, sulfur compounds, and peroxides such as dialkyl peroxide; the vulcanization acceleratorsinclude aldehyde ammonias, aldehyde amines, guanidines, thioureas, thiazoles, dithiocarbamates, xanthates and thiurams. The vulcanizing aids include stearic acid, oleic acid, lauric acid, flower of zinc, litharge, magnesium oxide, zinc stearate and the like. The softeners include phthalate plasticizers (dioctyl phthalate, dibutyl phthalate, etc.), aliphatic acid ester plasticizers (dioctyl adipate, dioctyl sebacate, etc.), phosphate ester plasticizers (triphenyl phosphate ester, tricresyl phosphate ester, etc.).

The resin used in the invention may be cross-linked by a vulcanizing agent, a vulcanization accelerator, a vulcanizing aid, a thermo-hardening resin for resin cross-linkage such as phenol resins, a curing catalyst such as Lewis acids, a peroxide for peroxide cross-linkage, and a co-crosslinking agent (such as polyfunctional (meth)acrylate, divinyl benzene, dimaleimid, etc.).

### (2) Method of addition

A method for adding a nanocarbon into a resin is not particularly limited, so long as it is possible to obtain a conductive resin wherein the above-described fibrous nanocarbon is homogeneously contained in the resin, and publicly known methods can be appropriately combined and used in the invention. For example, the following methods may be used: a pellet-formed or powder-formed resin and a predetermined amount of the above nanocarbon are dry-blended or wet-blended, then the mixture is either supplied to a rolling-type kneader and kneaded under heating, or introduced into an extruder and extruded in a rope form and cut into a pellet form. In addition, a resin-containing solution or dispersion and a nanocarbon may be blended in a liquid medium. Furthermore, mixing by wet masterbatch method is also possible. To disperse fibrous nanocarbons homogeneously into a resin, mixing by dry blending is particularly preferred.

An amount of addition of the fibrous nanocarbon into a resin is, in the case of the above mutilayered carbon nanotubes, preferably 4-20 wt% relative to the total weight of the conductive resin, and more preferably 7-15 wt%. When the amount of addition of nanocarbon is too small, the conductivity of the conductive resin decreases; when the amount of addition of nanocarbon is too large, homogeneous dispersion becomes difficult and the conductivity varies. Compared to carbon black, fibrous nanocarbons in small amounts can provide excellent conductivity.

### [2] Contact device

The contact device of the invention may take any form so long as it comprises the above-described conductive member. An example of preferred contact devices is that which comprises said conductive member, a base, and an elastic member mounted on the base, wherein the conductive member is biased by the elastic member so that it conductively connects to an object to be connected.

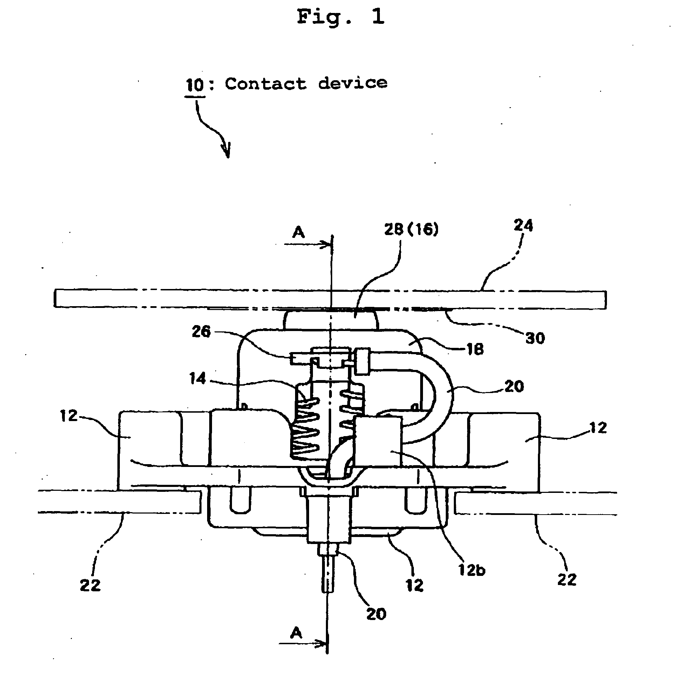

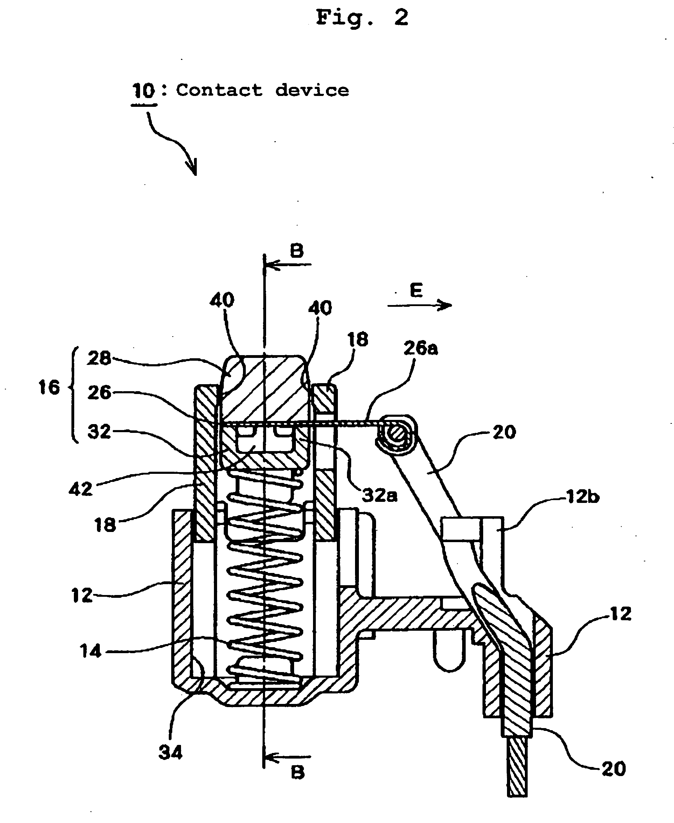

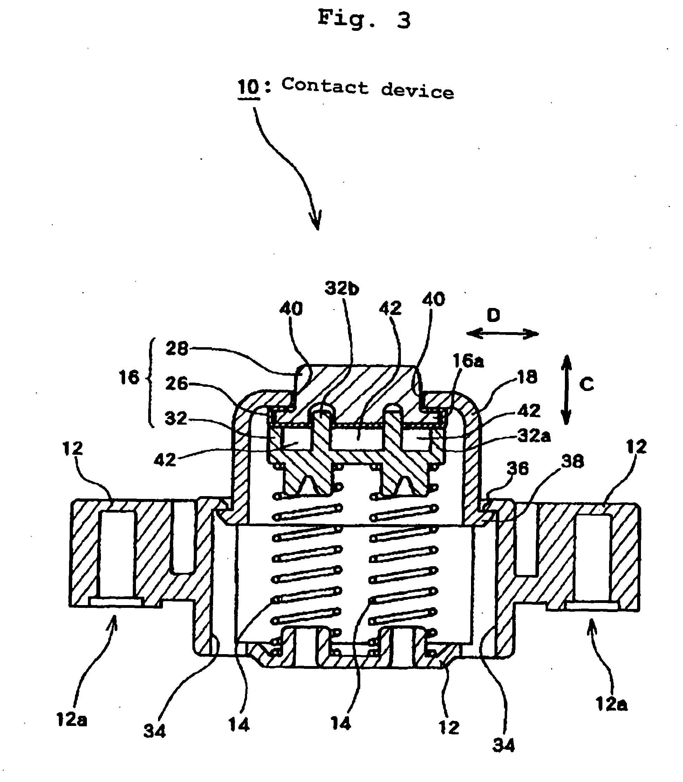

A preferred embodiment of the contact device of the invention is described with reference to Figs. 1-7. Figure 1 shows an external view of the contact device; Fig. 2 shows an A-A cross-sectional diagram of the contact device of Fig. 1; Fig. 3 shows a B-B cross-sectional diagram of the contact device of Fig. 2.

The contact device 10 comprises a base 12, an elastic member 14, a contact part 16, an intermediate body 18, and a conductor wire 20, and the device is used to form a conducting path between a first component 22 (such as a signal processing unit, etc. for vehicle window antennas) and a second component 24 (such as an vehicle window, etc.) as an object to be connected (object to be abutted). In the example shown in Figs. 1-3, a conducting path is formed by electrically connecting the following parts with this sequence: a conductive pattern on the amplifier circuit substrate within the first component 22 (not shown), the conductor wire 20, the metallic lead part 26, the conducting part (abutting part) 28, and the conductive pattern 30 of the second component (24).

The base 12 is fixed to the side of the first component 22. In the case shown in Figs. 1-3, the base 12 is fixed to the first component 22 via a tap screw (not shown) that is threaded into a bolt hole 12a. Here, the base 12 is preferably comprised of an insulating member (such as nylon resin).

The intermediate body 18 is movable within a predetermined area, while being guided by a guide part provided in the base 12, thereby making the contact part 16 to be attached to or detached from the second component 24. As shown in Figs. 2 and 3, in this example, the base 12 is provided with a guide hole 34 as a guide part. The guide hole 34 has an opening at the side of the second part 24, and is provided as a hole having a bottom which extends in the direction approximately perpendicular to the installation surface of the first component 22 (the direction along the arrow C in Fig. 3; hereinafter, referred to as the C direction or the up/down direction). The cross section of the guide hole is approximately elongated. The intermediate body 18 is guided by this guide hole 34, and it can freely protrude from the end surface of the base 12 at the side of an obj ect to be abutted (the second component 24) .

In this example, at the opening edge of the guide hole 34, an engagement catch 36 to prevent the loss of the intermediate body 18 is provided. An engagement catch 38 is also provided at the bottom of the intermediate body 18. The upper limit position (top dead center) of the intermediate body 18 is determined by the engagement positions of these engagement catches 36, 38 (positions shown in Figs. 2 and 3). The lower limit position (bottom dead center) of the intermediate body 18 is the position at which the bottom of the intermediate body 18 is abutted against the bottom of the guide hole 34, or the position at which the elastic member 14 has the shortest length.

The intermediate body 18 is loosely mounted in the guide hole 34. Namely, there is a predetermined gap between the outer wall of the intermediate body 18 and the inner wall of the guide hole 34, and the intermediate body 18 is movable by the amount of this gap in the direction of the arrow D in Fig. 3 (hereinafter, referred to as the D direction or the lateral direction). Furthermore, this gap is provided such that the intermediate body 18, while being inserted in the guide hole 34, can incline within a predetermined angle range relative to the attachment-detachment direction (approximately C direction). The effects of this gap structure as well as the inclination of the intermediate body 18 will be described later.

In addition, the intermediate body 18 is made as a cylindrical member having an upper base wall and a side wall. Then, the abutting part 28 is loosely inserted into a through hole 40 that is provided as a window on the upper base wall, and the abutting part 28 is exposed at the side of the second component 24. By engaging the side wall of this through hole 40 and the side wall of the abutting part 28, the movement of the intermediate body 18 is linked to the movement of the contact part 16 in the lateral direction. Accordingly, the movable range of the contact part 16 in the lateral direction is limited by the movable range of the intermediate body 18.

Furthermore, there is a predetermined gap between the outer wall of the abutting part 28 and the inner wall of the through hole 40. The abutting part 28 is movable with the amount of this gap in the direction perpendicular to the axial direction of the through hole 40 (the D direction in the posture shown in Fig. 3). In addition, this gap is provided such that the abutting part 28, while being inserted in the through hole 40, can incline within a predetermined angle range relative to the axial direction of the through hole 40 (the C direction in the posture shown in Fig. 3). The effects of this gap structure as well as the inclination of the abutting part 28 will be described later.

The contact part 16 is biased by the elastic member 14 toward the second component 24 (i.e., to the upward direction), so that it is forced on the second component 24. In this example, the contact part 16 comprises an abutting part 28, a metallic lead part 26, and an insulator 32. Among them, the abutting part 28 has an abutting surface of approximately planar form at its upper side. The abutting part 28 also has a guard part 16a extending in the lateral direction at its bottom side. By engaging the upper surface of the guard part 16a with the lower surface of the upper base of the intermediate body 18, the movement of the intermediate body 18 is linked to the movement of the contact part 16 in the upward direction. Accordingly, the movable range of the contact part 16 in the upward direction is limited by the movable range of the intermediate body 18. While the contact device 10 may incline slightly in some cases, generally, the device is basically mounted in a posture wherein the first component 22 is positioned at the bottom side of the vertical direction, so that the intermediate body 18 is mounted on top of the guard part 16a due to the gravity acting. Accordingly, the movement of the intermediate body 18 is also linked to the movement of the contact part 16 in the downward direction.

In this embodiment, the conductive member of the invention is used in the abutting part 28. Such an abutting part 28 can be obtained as follows: a silicone rubber as a rubber material is mixed with a nanocarbon, a vulcanizing agent and a processing aid, then a predetermined amount of the mixture is placed on a bottom mold which is heated to 150-180°C, formed by heat-pressing using a plunger mold of approximately the same temperature, and finally subjected to peripheral finishing.

In this example, the metallic lead part 26 and the conductor wire 20 are used as a conducting path, but the elastic member (for example, coil spring) 14 comprising a metallic conductor is not used as the conducting path. This is because when the elastic member 14 (in particular in the case of coil spring) comprising a metallic conductor is used as a conducting path, its inductance may adversely affect transmission properties of high-frequency signals. Therefore, in this example, an insulator 32 is used to insulate the elastic member 14 from the conducting path (the metallic lead part 26 and the abutting part 28 in this example).

When the distance between the conducting path and the elastic member 14 is small, a high-frequency signal may leak via the route from the metallic lead part 26 through the elastic member 14 to the ground electrode (not shown), resulting in an adverse effect on the transmission properties. Therefore, in this example, to prevent the leakage of high-frequency signals at frequency bands used, a distance is maintained between the conducing path (the metallic lead part 26 in this example) and the elastic member 14 using the insulator 32.

Furthermore, in this example, as shown in Fig. 3, the metallic lead part 26 comprising a formed metallic plate is provided with an arm 26a extending toward the outer lateral side (the direction of the arrow E in Fig. 2), and the arm 26a is connected to the conductor wire 20. The conductor wire 20 connected to the contact part 16 is elongated or contracted in accordance with the up/down movements of the contact part 16; at this time, when the conductor wire 20 is connected to the contact part 16 at a position further inner side of the elastic member 14, it is possible that the bent conductor wire 20 approaches the elasticmember 14. Therefore, in this example, by connecting the contact part 16 and the conductor wire 20 at the outer lateral position relative to the side edge of the elastic member 14, the conductor wire 20 is positioned apart from the elastic member 14, thereby maintaining the parasitic capacitance at low values. Moreover, a locking part 12b is provided to the base 12 to lock the conductor wire 20, and this locking part 12b also limits the position of the conductor wire 20. This mechanism suppresses the prevention of the smooth up/down movements of the contact part 16 due to unreasonable force applied to the contact part 16.

The abutting part 28 and the metallic lead part 26 are placed in a state in which its position is determined by the pin 32b of the insulator 32; and the abutting part 28, the metallic lead part 26 and the insulator 32 are integrated into the contact part 16, which moves in the lateral and upward directions. In addition, the abutting part 28 is pressed at its upper surface by the second component 24 or by the intermediate body 18 in the downward direction, due to the reaction force against the upward biasing force of the elastic body 14; therefore, the abutting part 28, the metallic lead part 26 and the insulator 32 move also in an integrated state in the downward direction.

The elastic member 14 is, in this example, two coil springs arranged in parallel, which are made such that their length becomes shorter than the free length when the intermediate body 18 is located at the uppermost position, as shown in Fig. 3. The distance between the bottom surface of the base 12 and the abutting surface of the object to be abutted (the surface of the conductive pattern 30), as well as dimensions of each part of the contact device 10 are determined such that when the contact part 16 is abutted against the object to be abutted (the second component 24), the contact part 16 is pushed downward and the elastic member 14 as a coil spring generates a biasing force in its elongating direction. This biasing force is the source of the contact-surface pressure on the abutting surface. As the elastic member 14, one coil spring or three or more coil springs may be used, and elastic members other than coil springs (for example, flat springs, etc.) may also be used. While the intermediate body 18 can engage the contact part 16, the intermediate body is made such that it is not subjected to the biasing force from the elastic member 14.

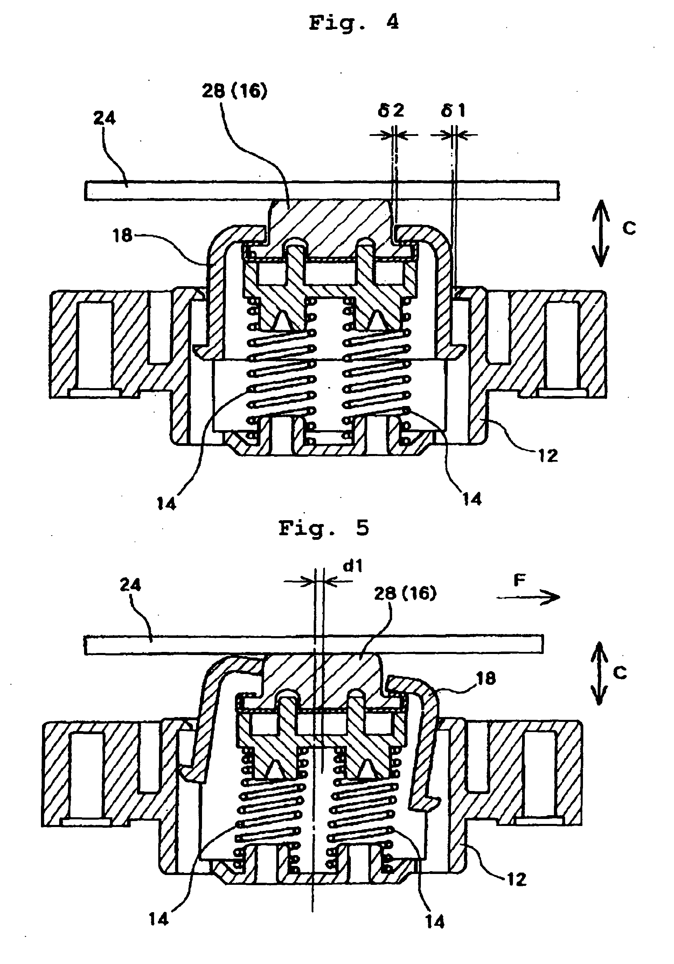

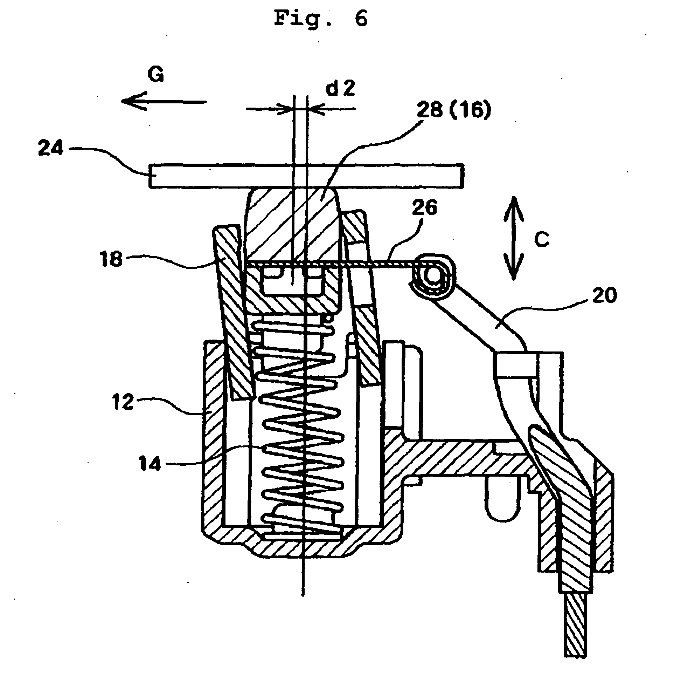

Figures 4-6 exemplify the arrangement and posture of internal parts of the contact device 10 when the device is actually mounted (in the state that the contact device 10 is attached to the first part 22 and the contact part 16 is pressing the surface to be abutted of the second part 24 as an object to be abutted); Fig. 4 shows a case wherein the contact part 16 is pressed by the object to be abutted in a fairly straight forward direction without being of fsetted in the lateral direction, Fig. 5 shows a case wherein the contact part 16 is pressed while being offsetted in the lateral direction (F direction), and Fig. 6 shows a case wherein the contact part 16 is pressed while being offsetted in the lateral direction (G direction).

As shown in Fig. 4, when the contact part 16 is pressed almost directly downward, the intermediate body 18 moves downward from the posture shown in Fig. 3 without an inclination relative to the guiding direction (C direction) of the guide hole 34. As can be seen from Fig. 4, in this example, the intermediate body 18 stands between the contact part 16 and the base 12; accordingly, the movable range of the contact part 16 in the up/down direction (C direction) is determined by the length overlapped by the intermediate body 18 and the guide hole 34. Namely, the movable range of the contact part 16 is associated with the structure of the intermediate body 18. In a conventional structure wherein a contact part 16 is directly guided by a guide hole 34 without an intermediate body 18, if we attempt to increase the movable distance of the contact part 16, the size of the contact part itself must be increased. In contrast, when an intermediate body 18 is provided as in the present embodiment, the moving distance of the contact part 16 can be increased without enlarging the contact part 16 itself. Such a structure is effective when the contact part 16 is made of a special material or an expensive material, or when it is desirable to make the contact part 16 small from the viewpoint of spring constant and others of the elastic member 14. In particular, as we mentioned above, when the abutting part 28 is made from a conductive rubber, it is desirable from the viewpoint of durability that the abutting part 28 has a block-like form as well as a form in which stress concentration hardly occurs. Namely, a structure involving such an intermediate body 18 is suitable when a conductive rubber is used as the abutting part 28, because the degree of freedom of the form of the abutting part 28 (contact part 16) increases.

The intermediate body 18 can offset in the lateral direction by an amount of the gap δ1 from the guide hole 34, in its no-inclining posture. In addition, the abutting part 28 can offset in the lateral direction by an amount of the gap δ2 between the side wall of said abutting part 28 and the side wall of the through hole 40 of the intermediate body 18, also in its no-inclining posture. This means that the amount of movement of the contact part 16 in the lateral direction at this posture is determined by the magnitude of these gaps δ1 and δ2.

Meanwhile, as shown in Fig. 5, when the contact part 16 further offsets in the lateral direction (F direction) (offset amount: d1), the intermediate body 18 inclines relative to the C direction, and moreover, the contact part 16 inclines relative to the intermediate body 18. As a result, the contact part 16 can move in the lateral direction for a fairly long distance (longer than the case of Fig. 4) while maintaining the state of abutting against the object to be abutted with its approximately-planar abutting surface. This can be realized by the structure wherein the intermediate body 18 engages the contact part 16 in the lateral direction and is inclinable relative to the guide hole 34, and by making the contact part 16 inclinable relative to the intermediate body 18. By means of such a structure, the abutting surface of the abutting part 28 and the abutting surface of the object to be abutted can significantly offset compared to conventional cases while maintaining the surface-contact state, thus improving wear resistance and suppressing an increase of contact resistance due to the single-sided contact.

Preferably, to increase the amount of inclination (the inclination angle to the C direction) of the intermediate body 18 relative to the guide part (guide hole 34), the gap between the side wall of the guide hole 34 and the outer wall of the intermediate body 18 is gradually increased with approaching the second part 24 (upper side). In this example, the intermediate body 18 is made to have a tapered shape (a shape wherein its width gradually decreases toward the upper end). When the gap size is constant along the guiding direction, as the amount of pressing the intermediate body 18 to the side of the first part 22 increases, the inclination of the intermediate body 18 decreases and the amount of offset of the contact part 16 in the lateral direction (F direction) decreases. In this embodiment, by adopting the above structure, the amount of inclination of the intermediate body 18 is maintained and the amount of offset of the contact part 16 in the lateral direction is maintained at a high value, even when the intermediate body is pressed.

Meanwhile, in this embodiment, the planar contact between the contact part 16 and the object to be abutted (second component 24) is maintained when the object to be abutted is not in parallel with the first component 22. The permissible inclination range of the object to be abutted is determined by the sum of the amount of inclination of the intermediate body 18 relative to the base 12 and the amount of inclination of the contact part 16 relative to the intermediate body 18.

In addition, as shown in Fig. 6, when the contact part 16 further offsets in the lateral direction (G direction) (offset amount: d2), the intermediate body 18 inclines to the G direction, and the contact part 16 inclines relative to the intermediate body 18. As a result, the contact part 16 can move in the lateral direction while maintaining the state of abutting against the object to be abutted at its approximately planar abutting surface. Here, to increase the amount of offset in the G direction, the intermediate body 18 desirably has a tapered shape (a shape wherein its width gradually decreases toward the upper end).

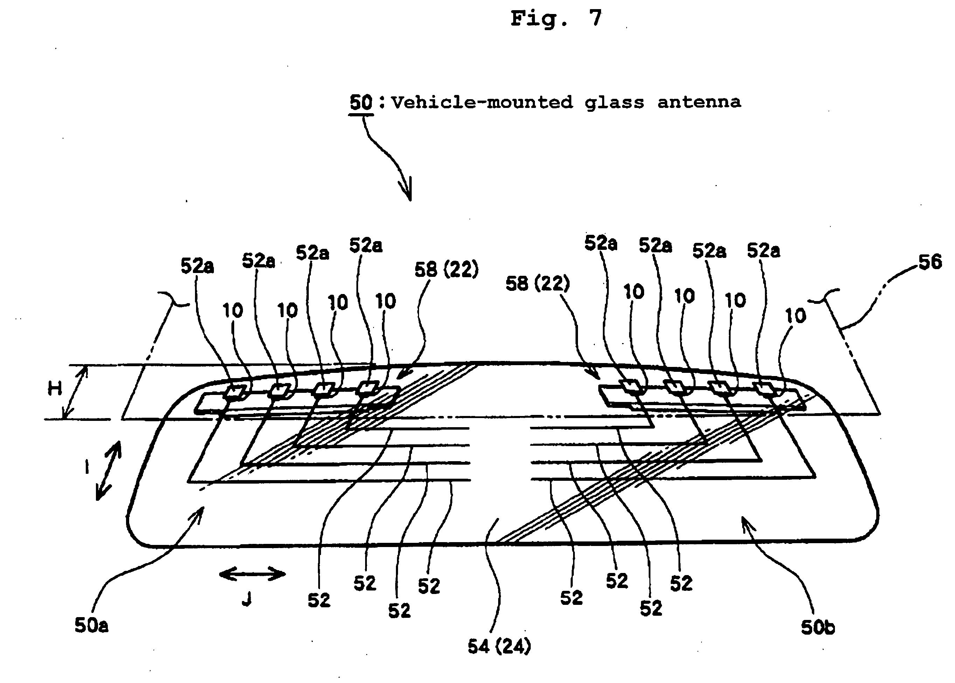

Figure 7 shows an example of a vehicle-mounted glass antenna in which the contact device of the invention is adopted. Antenna elements 52 of the vehicle-mounted glass antenna 50 are attached to the inside of, for example, a rear-window glass of a vehicle, by means of printing, etc., and one end of each antenna element 52 extends to an overlapping part H of the roof panel 56 and the rear-window glass 54 of the vehicle (the overlapping part H is invisible from outside by means of a cover, etc. which is not shown in the figure). On the roof panel 56, a substrate-supporting base 58 which supports a processing circuit including an amplifier to process signals received by the antenna elements 52 is fixed by bolts, etc. In the vehicle-mounted glass antenna 50, the substrate-supporting base 58 on which the contact device 10 is mounted is attached onto the roof panel 56, and the rear-window glass 54 is placed and fixed at the predetermined position.

The abutting part of the contact device 10 is in contact with the end contact point 52a by being biased by the elastic member, so that it is not exposed to the air; however, the parts other than the abutting part of the conductive member is exposed to the air. Accordingly, in conventional conductive members which use silver as a conductive material, the silver of the parts other than the abutting part is vulcanized or oxidized, resulting in color change and deterioration of the conductive member. Whereas in the contact device of the invention, since a resin comprising a fibrous nanocarbon is used as the conductive member, such deterioration does not occur even after a long period of usage. Also, since fibrous nanocarbons are used as a conductive material, there is no occurrence of loss of fillers due to usage, as observed in the conventional conductive members using silver-coated fillers as a conductive material.

### [Examples]

The present invention is described in further detail using the following examples; however, the invention is not limited thereto.

### Example 1

### 1. Production of conductive member

### (1) Preparation of multiwalled carbon nanotube

As described above, the multiwalled carbon nanotube claimed in this invention is prepared from an intermediate that was heat-generated at 800-1300°C, by means of annealing at a high temperature of 2400-3000°C. Suitable preparation methods to generate the above-described carbon fibrous structures are described below in detail.

To generate the above-described carbon fibrous structures, preferably at least two carbon compounds with different decomposition temperatures are used as carbon sources, without particular limitation. The at least two carbon compounds mentioned here do not necessarily refer to two or more kinds of source organic compounds; even when only one kind of source organic compound is used, when this compound is converted to two carbon compounds with different decomposition temperatures in a thermal decomposition reaction system through the reaction such as hydrodealkylation of toluene or xylene, the use of such two or more carbon compounds is also included. Here, as an ambient gas in the furnace for generation, inactive gases such as argon, helium and xenon as well as hydrogen gas may be used. As a catalyst, a mixture of a transition metal such as iron, cobalt and molybdenum or a transition-metal compound such as ferrocene and metal acetate, with sulfur or a sulfur compound such as thiophene and iron sulfide, may be used.

In the synthesis of an intermediate using these carbon sources and catalysts, generally-performed chemical vapor deposition with hydrogen carbonate, etc. is used. More specifically, a mixed solution of hydrogen carbonate as a raw material and a catalyst is evaporated, and hydrogen gas, etc. as a carrier gas is introduced in the reaction furnace, then the mixture is heat-decomposed at 800-1300°C. From this, an aggregate with a dimension from several cm to several tenth cm is synthesized, wherein a plurality of carbon fibrous structures (intermediates) having a sparse three-dimensional structure in which fibers with outer diameters of 15-150 nm are mutually interlocked via granular parts which grew from the above catalyst particles as a core, are present.

The thermal decomposition reaction of hydrocarbon as a raw material occurs mainly on the surface of the catalyst particles, or on the surface of granular parts grown from the catalyst particles as a core, and the hydrocarbon grows into a fibrous state through the progress of the recrystallization of the carbon generated by the decomposition along a certain direction from the catalyst particles or the granular parts. However, in obtaining the carbon fibrous structure claimed in the present invention, the balance between such thermal decomposition rate and the growth rate is intentionally varied. For example, by using at least two carbon compounds with different decomposition temperatures as carbon sources as described above, the carbon material does not grow only in one direction, but it grows three-dimensionally with the granular parts as centers. Of course, such three-dimensional growth of carbon fibers not only depends on the balance between thermal decomposition rate and growth rate, but also on the selectivity of the crystalline surfaces of catalyst particles, the retention time in the reaction furnace, and the temperature distribution in the furnace. Furthermore, the balance between said thermal decomposition rate and growth rate is affected not only by the kinds of carbon sources as described above, but also by the reaction temperature and gas temperature, etc; in general, when the growth rate is higher than the thermal decomposition rate, the carbonmaterial grows in a fibrous form; in contrast, when the thermal decomposition rate is higher than the growth rate, the carbon material grows in the periphery of the catalyst particles. Accordingly, by intentionally varying the balance between thermal decomposition rate and growth rate, the growth direction of the above carbon material is not restricted to only one direction, but multiple directions are permitted under control, enabling the formation of the three-dimensional structure claimed in this invention. Here, in order to easily form a three-dimensional structure as mentioned above in a generated intermediate wherein fibers are mutually interlocked via granular parts, it is desirable to optimize the composition of catalysts, etc., retention time in the furnace, reaction temperature, gas temperature and others.

Thus-obtained intermediate has a (sodden-state, incomplete) structure that looks like pasted patchy sheets comprising carbon atoms, and it has a remarkably large Dband shown by Raman spectroscopic analysis and many defects. In addition, the generated intermediate comprises unreacted raw materials, non-fibrous carbides, a tar content and catalyst metals. Therefore, a high-temperature heat treatment at 2400-3000°C is performed to remove these residual materials from this intermediate to obtain a desired carbon fibrous structure with small defects. In concrete terms, this intermediate is heated at 800-1200°C to remove unreacted raw materials and volatile matter contents such as a tar content, it is then annealed at a high temperature of 2400-3000°C to prepare the desired structure, and to simultaneously remove the catalyst metals contained in the fibers by evaporation. During this process, reductive gases or a slight amount of carbon dioxide gas may be added to the inactive gas atmosphere in order to protect the material structure. When the above intermediate is annealed at the temperature range of 2400-3000°C, the patchy sheets comprising carbon atoms mutually interlock to form a plurality of graphene-sheet layers.

Prior to or following the above-described annealing treatment, a process wherein the carbon fibrous structure is coarsely crushed into the size of the circle-equivalent mean diameter of several cm, and a process wherein the coarsely crushed carbon fibrous structure is finely crushed into the size of the circle-equivalent mean diameter of 50-100 µm are performed to obtain the carbon fibrous structure with a desired circle-equivalent mean diameter. Fine-crushing may be performed without coarse crushing. In addition, an aggregate comprising a plurality of the carbon fibrous structures claimed in the invention may be treated for granulation, so that it has an easy-to-use shape, size and bulk density. More preferably, to effectively use the above structure formed at the time of reaction, annealing of said structure in a condition of low bulk density (a condition wherein fibers are maximally elongated and the porosity is high) is effective in providing a conductivity to the resin.

Using the multiwalled carbon nanotube obtained by the above methods, the following tests were performed. We confirmed that the multiwalled carbon nanotube had a diameter of 15-100 nm and an aspect ratio of 100-20000 by a scanning electron microscope (SEM).

We confirmed the following properties as well: bulk specific gravity of 0.01 g/cm³ by sedimentation density method (the specific gravity obtained from the theoretical value of graphite is 2.0 g/cm³), specific surface area of 30 m²/g by N2-BET, oxidation onset temperature of 780°C by TG curve (weight reduction ratio relative to temperature), and powder electric resistance of 0.004 Ω·cm by compression method (0.8 g/cm³).

### (2) Production of conductive member

100 wt parts of the silicone compound obtained by kneading a silicone rubber and 30 wt parts of previously-added carbon black (acethylene black), 10 wt parts of the multiwalled carbon nanotube obtained in (1), and 2 wt parts of a vulcanizing agent (2,5-dimethyl-2,5-di(tert-butylperoxy)hexane) were introduced into an open role and kneaded at 10-40°C for 20-30 min to form a conductive resin. Then using a compression press forming machine, the resin was subjected to forming by the application of 20 MPa of pressure at 150°C for 12 min, to produce a conductive member used as a contact part.

### 2. Evaluation of transmission properties

With respect to the conductive members obtained, their transmission properties in the practical range of use (AM, FM and TV bands) were determined by measuring the range in which frequency was between 100 kHz and 770 MHz using a network analyzer, and transmission losses at 1000 kHz which is the center frequency of AM band were evaluated. Using this evaluation method, when silver-coated glass beads are used, the effect of their loss can be detected as a noise in the AM band, and the relationship between material properties and transmission properties can be clearly confirmed in the AM band. A transmission loss is measured by the following method, and is expressed as an amount of decrease [dB] of output signals relative to input signals at the center frequency of 1000 kHz of the AM band.

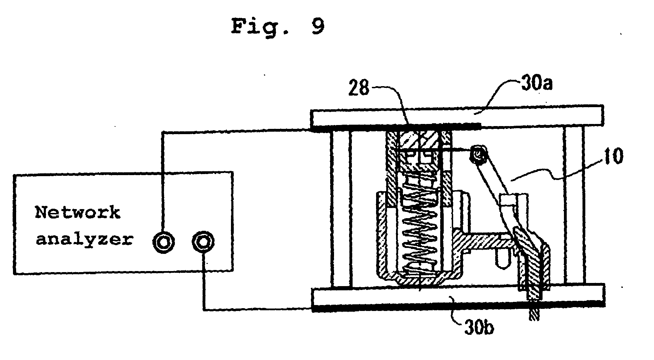

Regarding the measurement method, the contact device 10 in which the conductive member is incorporated as shown in Fig. 9 is sandwiched between the upper and lower substrates, and the upper substrate 30a is connected to the upper surface of the conductive member 28 (assuming a glass-pattern contact surface), and the lower surface is connected to the lower substrate 30b via a harness. Each of the substrates is connected to the network analyzer, and the output signals corresponding to input signals input into this measurement system are measured. Table 1 shows results.

### Example 2

A multiwalled carbon nanotube was prepared similar to Example 1, then a conductive member was produced similar to Example 1 except that 15 wt parts of the obtained multiwalled carbon nanotube were used. The transmission properties of the obtained conductive member were evaluated similar to Example 1. Table 1 shows results. In the transmission properties, further improvement in the performance was observed.

### Example 3

A conductive member was produced similar to Example 1 except that 10 wt parts of the carbon nanofiber synthesized by vapor method [VGCF®, Showa Denko K.K.] were used instead of the carbon nanotube used in Example 1. The transmission properties of the obtained conductive member were evaluated similar to Example 1. Table 1 shows results. The transmission properties of this conductive member were slightly inferior to those in Example 1, but they were in a sufficient level for actual use.

### Example 4

A conductive member was produced similar to Example 1 except that 40 wt parts of the carbon nanofiber [VGCF®, Showa Denko K.K.] were used instead of the carbon nanotube used in Example 1. The transmission properties of the obtained conductive member were evaluated similar to Example 1. Table 1 shows results. By the addition of a larger amount of the carbon nanofiber, transmission properties similar to those in Example were obtained.

### Comparative example 1

Instead of the carbon nanotube used in Example 1, a silicone rubber compound described in JP A No. 2005-269115 was used in the conductive member. Its transmission properties were evaluated similar to Example 1. Table 1 shows results. Although superior transmission properties were obtained, after the conductive member was left in the air containing sulfur for 1 month, the silver corroded and the color of the sample changed into brownish.

### Comparative example 2

A conductive member was produced similar to Example 1 except that 10 wt parts of carbon black (acethylene black) were used instead of the carbon nanotube used in Example 1. The transmission properties of the obtained conductive member sample were evaluated similar to Example 1. Table 1 shows results.

**[Table 1]**

| Transmission property [dB] of AM band. Measurement frequency: 1000 kHz | | | | | | |
|---|---|---|---|---|---|---|
| | 1 | 2 | 3 | 4 | 5 | Average |
| Example 1 | -0.34 | -0.30 | -0.34 | -0.35 | -0.34 | -0.33 |
| Example 2 | -0.21 | -0.29 | -0.31 | -0.28 | -0.27 | -0.27 |
| Example 3 | -0.55 | -0.42 | -0.52 | -0.60 | -0.61 | -0.54 |
| Example 4 | -0.30 | -0.22 | -0.20 | -0.21 | -0.27 | -0.24 |
| Comparative example 2 | -1.04 | -0.88 | -1.06 | -1.03 | -0.90 | -0.98 |

## Claims

1. A conductive member comprising a conductive resin, for transmitting electric signals by being conductively connected to an object to be connected, wherein said conductive resin comprises a fibrous nanocarbon in a resin that is a base material.

2. The conductive member according to claim 1, wherein the aspect ratio of the fibrous nanocarbon is between 10 and 20000.

3. The conductive member according to claim 1 or 2, wherein the fibrous nanocarbon is contained at 4-40 wt% of the total weight of the conductive resin.

4. The conductive member according to any one of claims 1-3, wherein the fibrous nanocarbon is a carbon nanotube, a carbon nanofiber or a mixture thereof.

5. The conductive member according to claim 4, wherein the carbon nanotube is a multiwalled carbon nanotube.

6. The conductive member according to claim 5, wherein the maximum diameter of the cross sections orthogonal to the longitudinal direction of the multiwalled carbon nanotube is 15-150 nm.

7. The conductive member according to claim 5 or 6, wherein I_{D}/I_{G} of the multiwalled carbon nanotube measured by Raman spectroscopic analysis is 0.1 or less.

8. The conductive member according to any one of claims 5-7, wherein the conductive member is composed of a conductive resin comprising a three-dimensional network-form carbon fibrous structure in a resin that is a base material, said carbon fibrous structure being composed of multiwalled carbon nanotubes that extend from granular parts as origins of growth during a growth process and that are connected to each other, and wherein cross sections orthogonal to the longitudinal direction of said multiwalled carbon nanotubes have polygonal shapes.

9. The conductive member according to claim 4, wherein the carbon nanofiber is a carbon nanofiber manufactured by gas phase process.

10. The conductive member according to any one of claims 1-9, wherein the resin that is a base material is an elastomer.

11. A contact device comprising the conductive member according to any one of claims 1-10.

12. A contact device comprising the conductive member according to any one of claims 1-10, a base, and an elastic member mounted on said base, wherein said conductive member is biased by said elastic member so that it is conductively connected to an object to be connected.
